# FASCICULE DE BREVET EUROPEEN

(11) **EP 1 006 776 B1**
(45) Date de publication et mention de la délivrance du brevet: **26.09.2001**
(21) Numéro de dépôt: 97913232.1
(22) Date de dépôt: 31.10.1997
(51) Int. Cl.: A01G 9/04

(54) **DISPOSITIF POUR L'ILLUMINATION EQUILIBREE DE VEGETAUX VIVANTS**
VORRICHTUNG ZUR AUSGEWOGENEN BELEUCHTUNG VON LEBENDIGEN PFLANZEN
DEVICE FOR PROVIDING LIVE PLANTS WITH BALANCED LIGHTING

(30) Priorité: 31.10.1996 FR 9613373
(43) Date de publication de la demande: 14.06.2000
(73) Titulaire: Nivet, Bernard, F-91620 La Ville du Bois (FR); Nivet, Eric, 91310 Montlhery (FR)
(72) Inventeur: Nivet, Bernard, F-91620 La Ville du Bois (FR); Nivet, Eric, 91310 Montlhery (FR)
(74) Mandataire: Pontet, Bernard
(86) Numéro de dépôt international: FR9701959
(87) Numéro de publication internationale: WO9818313

(56) Documents cités:
- CH-A- 682 971
- DE-A- 3 216 638
- FR-A- 2 242 926
- FR-A- 2 528 662
- US-A- 4 051 627
- US-A- 5 152 099

## Description

La présente invention concerne un dispositif pour l'illumination équilibrée, ou exposition équilibrée à la lumière, de végétaux vivants, en particulier une plante d'intérieur, telle qu'une plante en pot ou des végétaux, notamment des fleurs coupées contenues dans un vase, mais aussi des arbustes, des massifs et toutes sortes de plantations horticoles et/ou agricoles.

Dans une pièce, la lumière pénètre toujours sous la même incidence. On constate au bout d'un certain temps que la face exposée à la lumière de végétaux installés dans cette pièce est plus épanouie et plus développée que leurs autres faces. Les feuilles les plus exposées à la lumière sont plus nombreuses et plus grandes. Les fleurs se tournent toutes vers la lumière. La plante ou le bouquet est esthétiquement déséquilibré(e).

Il en résulte un développement disgracieux de la plante, et des risques d'instabilité pouvant aller jusqu'à la chute du pot ou du vase.

On remédie généralement à cette situation en faisant tourner manuellement le pot de temps en temps pour que toutes les faces de 1a plante se trouvent exposées tour à tour à la lumière. Mais cette manipulation manuelle présente des inconvénients notables, en effet :
- il faut penser à l'effectuer régulièrement,
- lors d'une absence prolongée du manipulateur, la manipulation n'est pas faite, ou bien il faut qu'une autre personne s'en charge et se déplace spécialement pour cela,
- si le pot est lourd et/ou encombrant, la manipulation peut s'avérer difficile.

L'invention vise, suivant le préambule de la revendication 1, un dispositif pour l'illumination équilibrée de végétaux vivants, comprenant un stator, un rotor mobile en rotation relativement au stator selon un axe sensiblement vertical, et un moteur d'entraînement du rotor, relié à une source d'énergie, le rotor étant équipé de moyens pour recevoir au moins indirectement les végétaux et les entraîner avec lui, par rapport au stator, en une rotation normale inférieure à environ une dizaine de tours par jour.

La rotation très lente prévue dans un tel dispositif, connu selon le DE-A-32 16638 ou le FR-A-25 28662, est largement suffisante pour équilibrer l'illumination des végétaux. En pratique une rotation d'un quart de tour par 24h suffit pour la plupart des végétaux. Pour certains végétaux. particulièrement sensibles aux manipulations, une rotation d'un dixième de tour par 24h est même préférable. Dans ces conditions, la consommation d'énergie est très faible, le coût de fonctionnement est donc très limité.

Le US-A-5 152 099 décrit un dispositif du même genre dans lequel le rotor ne tourne qu'une fois par 24 heures, sur une fraction de tour, au moyen d'un relais temporisateur intercalé entre le- moteur de rotation et une pile électrique prévue pour son alimentation.

Avec ces dispositifs connus, les manipulations manuelles des pots, pénibles et dangereuses pour la santé, ne sont pas supprimées. Il reste nécessaire de tourner manuellement le pot pour les soins horticoles et/ou pour choisir une orientation préférée, par exemple lorsque des invités sont attendus.

Suivant l'invention, le dispositif est caractérisé par des moyens mis à la disposition de l'utilisateur pour produire à volonté une rotation temporaire du rotor par rapport au stator à une vitesse plus grande que celle correspondant à ladite cadence journalière.

Il est avantageux que le moteur soit alimenté par intermittences pour la rotation normale et temporairement en continu pour la rotation plus rapide.

D'autres particularités et avantages de l'invention apparaîtront encore dans la description ci-après. Aux dessins annexés, donnés à titre d'exemples non limitatifs:
- la figure 1 représente en coupe axiale verticale un schéma de principe du dispositif selon un premier mode de réalisation;
- la figure 2 est une vue horizontale selon la coupe II-II de la figure 1, avec arrachement;
- la figure 3 est un schéma des moyens de commande du moteur d'entraînement;
- la figure 4 représente l'allure du signal de commande du moteur d'entraînement;
- la figure 5 est une vue analogue à la figure 1, pour un deuxième mode de réalisation du dispositif;
- la figure 6 est une vue de dessus du deuxième mode de réalisation;

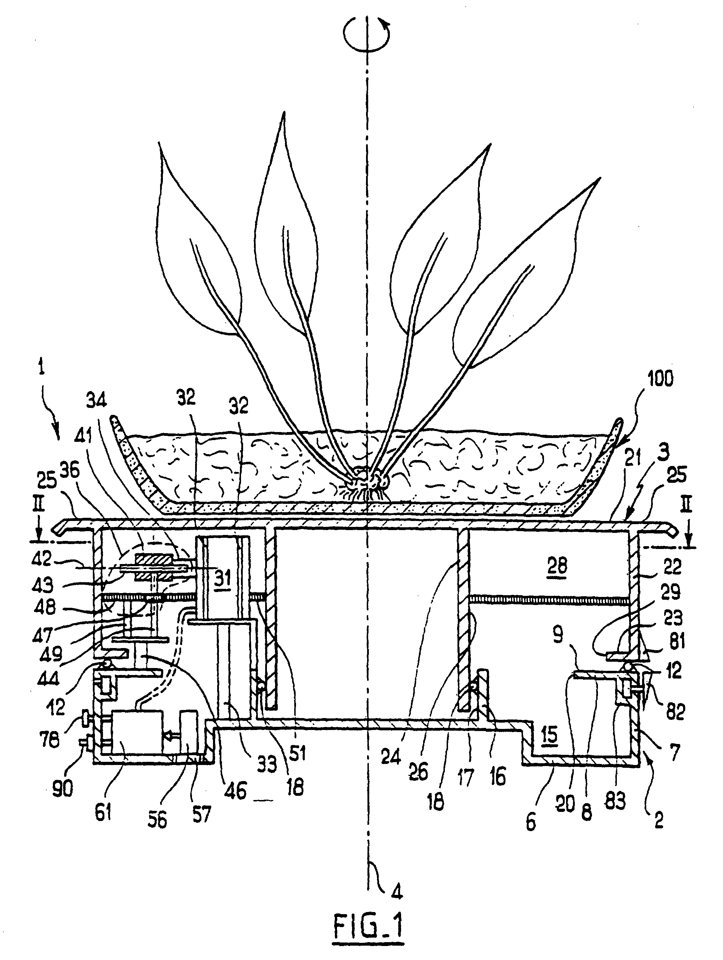

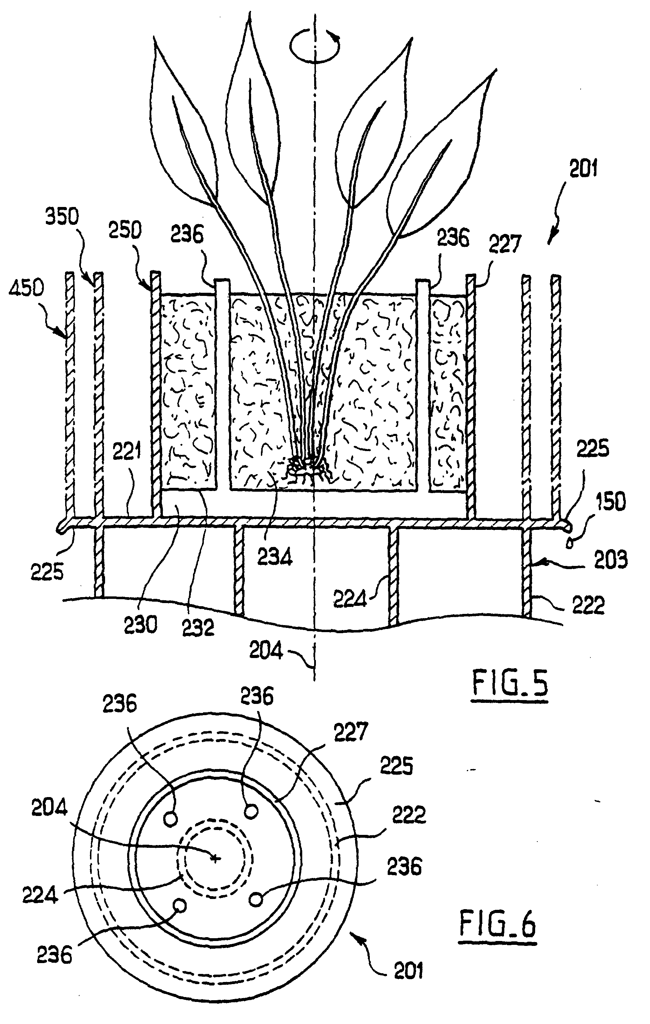

- la figure 5 est une vue analogue à la figure 1, pour un troisième mode de réalisation du dispositif.

Comme illustré à la figure 1, le dispositif 1 comprend un stator 2 et, au-dessus de celui-ci, un rotor 3 mobile en rotation autour d'un axe vertical 4 par rapport au stator 2.

Le stator 2 et le rotor 3 peuvent être réalisés en matière plastique, par exemple par moulage, sous la forme de deux coques superposées sensiblement creuses et cylindriques.

Le pot de fleurs 100 est installé sur la face supérieure d'un plateau supérieur 21 du rotor 3, de manière à être entraîné par adhérence dans la rotation du rotor 3 par rapport au stator 2.

Le stator 2, servant de socle, comprend un fond circulaire 6 supportant une paroi latérale cylindrique 7 qui se termine à son extrémité supérieure par un rebord intérieur 8 annulaire et sensiblement parallèle au fond 6.

Sur la face supérieure 9 du rebord intérieur 8, est agencé un premier système annulaire de roulement 12, formé, selon le mode de réalisation illustré, de billes, par exemple au nombre de 4 et régulièrement réparties autour de l'axe 4, libres en rotation dans des cages serties sur ladite face supérieure 9. Le rotor présente un rebord intérieur 23 dont la face inférieure forme piste de roulement sur les billes 12, lesquelles supportent ainsi le poids du rotor 3 et du pot de fleurs 100. Le rebord 23 est relié au plateau supérieur 21 par une paroi latérale 22 du rotor 3.

De préférence, le plateau supérieur 21, 221 se prolonge radialement vers l'extérieur par une lèvre annulaire 25, 225 qui surplombe la paroi latérale 22. Ainsi, l'écoulement des surplus d'eau d'arrosage, représentés par les gouttes 150 (figure 5) s'effectue loin de ladite paroi latérale 22, 222, ce qui empêche l'eau d'arrosage de glisser le long de la paroi latérale 22, 222, et de pénétrer à l'intérieur du dispositif--1, 201 entre le rotor 3, 203 et le stator 2, 202. Tout risque de corrosion des éléments intérieurs du dispositif est évité.

Suivant le mode de réalisation illustré le stator 2 comprend en outre un cylindre intérieur 16, concentrique à la paroi latérale 7, et dirigé vers le haut à partir du fond 6.

Sur la face interne 17 du cylindre intérieur 16 est agencé, pour le guidage en rotation du rotor 3 par rapport au stator 2, un deuxième système de roulement 18 tel qu'un roulement à billes, ou des billes libres en rotation dans des cages serties sur la face 17 et régulièrement réparties autour de l'axe 4, ou encore des galets régulièrement répartis sur ladite face 17. Ce deuxième système de roulement 18 s'appuie sur la face radialement extérieure 26 d'une jupe tubulaire centrale 24 du rotor 3, portée par la face inférieure du plateau 21.

Entre la paroi latérale 7, le cylindre 16, le fond 6 et le rebord intérieur 8, le stator 2 renferme une cavité annulaire 15 qui s'ouvre vers le haut par un orifice annulaire 20.

Pour assurer la stabilité du dispositif 1 pendant la rotation, il est préférable que le pot de fleurs 100 soit centré sur le plateau 21. A cet effet on peut prévoir des lignes circulaires concentriques de différents diamètres (non représentées) dessinées sur le plateau supérieur 21.

Entre la paroi latérale 22, la jupe centrale 24, le plateau 21 et le retour intérieur 23 s'étend à l'intérieur du rotor 3 une cavité annulaire 28 qui s'ouvre vers le bas par un orifice annulaire 29 situé en regard de l'orifice annulaire 20 du stator 2. Les orifices 20 et 29 font communiquer la cavité 15 du stator 2 avec la cavité 28 du rotor 3.

L'entraînement en rotation du rotor 3 par rapport au stator 2 est motorisé. Un moteur 31 est solidaire, par exemple au moyen de sangles 32, d'un support 33 fixé au stator 2. Il s'agit, par exemple, d'un moteur à courant continu connu.

Le moteur d'entraînement 31 est lié à un système de démultiplication 36 formé d'une cascade de pignons pour réduire la vitesse de rotation du rotor 3 par rapport à celle de l'arbre du moteur 31. Le moteur 31 et le système de démultiplication 36 sont placés dans la cavité annulaire 28 du rotor 3.

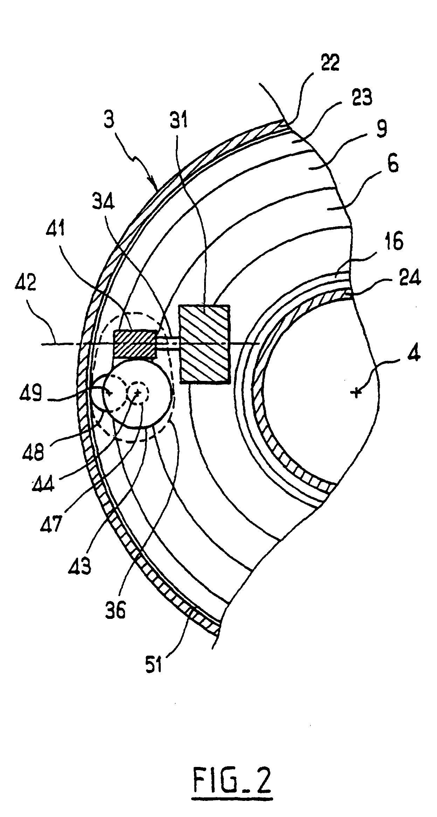

La figure 2 illustre en vue de dessus un mode de réalisation du système de démultiplication 36. Pour simplifier, certains éléments, tels que les supports, ne sont pas représentés.

Une vis sans fin 41 est entraînée par l'arbre 34 du moteur 31 en rotation autour d'un axe 42 sensiblement horizontal.

La vis sans fin 41 engrène avec une première roue dentée 43 tournant dans un plan sensiblement horizontal.

Sur le même axe 44 que la première roue dentée 43 se trouve une deuxième roue dentée 47 de diamètre beaucoup plus faible, qui est solidaire en rotation de la première roue dentée 43.

Cette deuxième roue dentée 47 engrène à son tour, par l'intermédiaire d'une troisième roue dentée 48, avec une couronne dentée 51 s'étendant sur la périphérie intérieure de la paroi latérale 22 du rotor 3, selon un plan sensiblement horizontal.

L'arbre commun 44 de la première et la deuxième roue dentée 43 et 47, et l'arbre de la troisième roue dentée 48 sont supportés par un support 46 lié au stator.

Le moteur 31 est alimenté par une source d'énergie 56 et commandé par des moyens de commande 61, placés les uns et les autres dans la cavité annulaire 15 du stator 2.

La source d'énergie 56 est de préférence autonome et amovible, et comprend par exemple au moins une pile électrique de longue durée. Une trappe 57 est ménagée dans la paroi, par exemple la paroi inférieure, du stator 2 pour installer et au besoin remplacer la pile.

Le dispositif 1 comprend des moyens de détection 80, 82, 83 pour constater un dysfonctionnement tel que l'interruption inhabituelle et prolongée de la rotation du rotor 3 par rapport au stator 2, par exemple en cas de panne ou d'usure de la pile 56. La rotation étant très lente, il n'est pas commode de vérifier visuellement qu'elle s'effectue.

Les moyens de détection 80, 82, 83 comprennent un repère visuel 80 fixé sur l'extrémité inférieure de la paroi latérale 22 du rotor 3, et un curseur 82 qui coulisse librement dans une glissière 83 formée à la périphérie de l'extrémité supérieure de la paroi latérale 7 du stator 2.

Lorsque l'utilisateur veut s'assurer que la rotation du rotor 3 par rapport au stator 2 s'effectue, il déplace le curseur 82 dans la glissière 83 jusqu'à l'amener en face du repère 80. Il laisse s'écouler une période significative, de l'ordre par exemple de quelques heures. Puis il observe lesdits moyens de détection : si le curseur 82 se trouve toujours en face du repère 80, la rotation est interrompue, et il faut songer à remplacer la pile usagée 56.

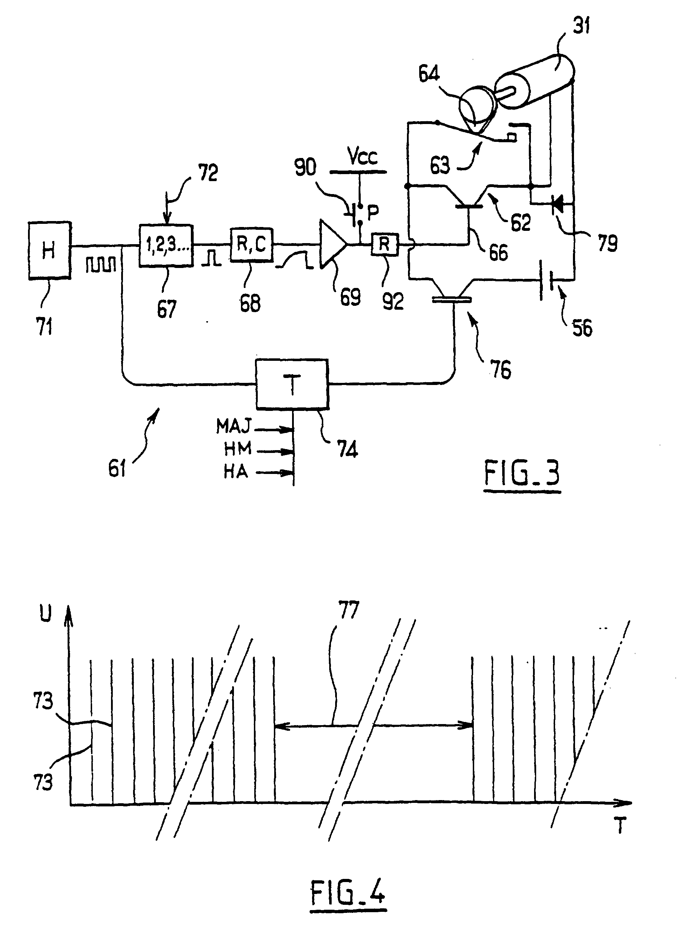

On va maintenant décrire les moyens de commande 61 du moteur d'entraînement 31, représentés à la figure 3.

La tension produite par la pile 56 peut être appliquée aux bornes du moteur 31 par l'un ou l'autre de deux interrupteurs, l'un électronique 62 et l'autre mécanique 63, montés en parallèle. L'interrupteur mécanique 63 est actionné par une came 64 liée en rotation à l'arbre du moteur 31. L'interrupteur électronique 62, tel qu'un transistor, est fermé lorsqu'une tension est appliquée à sa base 66 qui est reliée à la sortie d'un compteur 67 par l'intermédiaire d'un circuit RC 68 et d'un amplificateur 69. Le compteur 67 est monté pour compter les impulsions qui lui sont envoyées par une horloge 71. Lorsque l'état de comptage du compteur 67 dépasse la valeur appliquée à son entrée de consigne 72, le compteur émet une impulsion telle que 73 (figure 4) qui est appliquée aux bornes du moteur 31 après avoir été allongée dans le temps jusqu'à par exemple 100ms par le circuit RC 68 et amplifiée par l'amplificateur 69. Sous l'effet de l'impulsion, le moteur 31 commence une rotation, ce qui provoque la fermeture de l'interrupteur mécanique 63, lequel maintient l'alimentation du moteur 31 même après la fin de l'impulsion 73 ayant initié cette rotation. L'alimentation du moteur 31 est entretenue jusqu'à ce que le moteur, ayant effectué un tour complet, provoque à nouveau l'ouverture de l'interrupteur mécanique 63 par l'intermédiaire de la came 64.

Ainsi, le dispositif décrit fournit le moyen de faire effectuer au moteur 31 une rotation de un tour chaque fois que s'est écoulé un intervalle de temps de repos, déterminé par la consigne appliquée au compteur 67. Connaissant le rapport de réduction entre le moteur 31 et le rotor 3 du dispositif selon l'invention, rapport qui peut être choisi égal à environ 400, chaque rotation de un tour du moteur 31 produit une rotation d'un peu moins de un degré d'angle du rotor 3. Si l'intervalle de temps défini par la consigne 72 est de l'ordre d'un quart d'heure entre deux impulsions 73 successives, le rotor 3 effectue par rapport au stator 2 une rotation continue d'environ un quart de tour toutes les 24 heures. La consigne 72 peut être réglable manuellement par l'utilisateur, par exemple au moyen d'un bouton 78 représenté à la figure 1, de manière à régler la cadence journalière de rotation du rotor 3. Une diode de roue libre 79 est prévue aux bornes du moteur 31 pour éliminer les effets néfastes des coupures dans les interrupteurs 62 et 63.

Selon un perfectionnement également représenté à la figure 3, il est prévu des moyens interrompant toute rotation du moteur 31 et par conséquent du rotor 3 pendant un certain laps de temps prédéfini, notamment pendant la période nocturne. Pour cela un temporisateur 74 reçoit les impulsions fournies par l'horloge 72 et commande l'ouverture et la fermeture à des heures prédéterminées d'un interrupteur électronique 76 monté en série avec la pile 56 d'une part et avec le montage parallèle des interrupteurs 62 et 63 d'autre part. Il en résulte une disparition complète des impulsions pendant un laps de temps illustré sous la référence 77 à la figure 4. Le temporisateur 74 comporte une entrée de mise à l'heure MAJ, une entrée HM de sélection de l'heure de mise en marche et une entrée HA de sélection de l'heure d'arrêt. Le circuit de commande 61 peut être aménagé sous la forme d'un circuit imprimé, sauf en ce qui concerne la came 64 de l'interrupteur mécanique 63. Le circuit de commande 61 réalise une rotation sensiblement continue, formée en fait de petites rotations incrémentielles séparées par des périodes de repos.

Selon un autre perfectionnement également représenté à la figure 3, il est prévu des moyens pour entretenir une rotation rapide du rotor 3 relativement au stator 2, pendant une durée contrôlée par l'utilisateur, de préférence brève. En pratique, cette rotation rapide et brève peut être utile pour amener face à l'utilisateur une zone du pot de fleur qui est difficilement accessible, par exemple lorsque le dispositif 1 est placé dans un coin ou devant un mur, si l'utilisateur veut par exemple effectuer une opération horticole particulière.

Pour cela, un bouton-poussoir 90 est introduit dans le circuit entre l'amplificateur 69 et la base 66 de l'interrupteur électronique 62. Une tension continue Vcc est appliquée par commande forcée et alimente la base 66 de l'interrupteur électronique 62 qui est maintenu en conduction. Le moteur 31 se trouve alors alimenté en permanence tant que la tension Vcc est appliquée. Ladite tension Vcc peut par exemple être la tension d'alimentation de l'amplificateur 69 ou peut être prélevée sur la source de tension 56.

Une résistance R 92 est intercalée entre le bouton-poussoir 90 et la base 66 pour protéger celle-ci.

On va maintenant décrire un deuxième mode de réalisation du dispositif selon l'invention, qui est illustré aux figures 5 et 6 et qui ne sera décrit que pour ses différences avec le premier mode de réalisation.

Pour simplifier la figure 5, seule la partie supérieure du dispositif 201 est représenté. Le rotor 203 comprend un plateau supérieur 221, une paroi latérale 222, une jupe centrale 224, une lèvre annulaire 225, et un axe de rotation 204.

Au-dessus du plateau supérieur 221 s'élève une cloison supérieure 227 à contour fermé qui forme avec ledit plateau supérieur 221 un récipient 250. De préférence, ladite cloison supérieure 227 est moulée avec le rotor 203.

Le récipient 250 peut être cylindrique, comme illustré à la figure 5, ou conique (non représenté). Il est centré relativement au plateau supérieur 221 et présente de préférence une section circulaire (figure 6) .

Selon une première variante d'exécution, le diamètre du récipient 250 est inférieur au diamètre de la paroi latérale 222. Selon deux autres variantes d'exécution, un récipient 350 présente le même diamètre que la paroi latérale 222, ou le récipient 450 s'étend jusque sur la lèvre annulaire 225.

Ledit récipient, destiné à recevoir une plante ou autre produit horticole et/ou agricole, est de préférence un récipient à réserve d'eau. Il comprend, de manière connue en soi, une réserve d'eau 230 s'étendant au fond du récipient 250, des moyens de séparation 232 entre la réserve d'eau 230 et la terre 234 ou autre élément nutritif, et des moyens d'alimentation 236 de la réserve d'eau 230.

Lesdits moyens d'alimentation 236 comprennent au moins un conduit d'alimentation 236 sensiblement vertical, reliant la réserve d'eau 230 à la surface libre du récipient 250, à travers toute la hauteur de terre 234. De préférence, le récipient 250 présente quatre conduits d'alimentation 236, qui sont répartis autour de l'axe 204 (figure 6). Ainsi, il est possible d'apporter de l'eau dans la réserve d'eau 230 quelle que soit la position angulaire du rotor 203 dans sa rotation par rapport au stator 2.

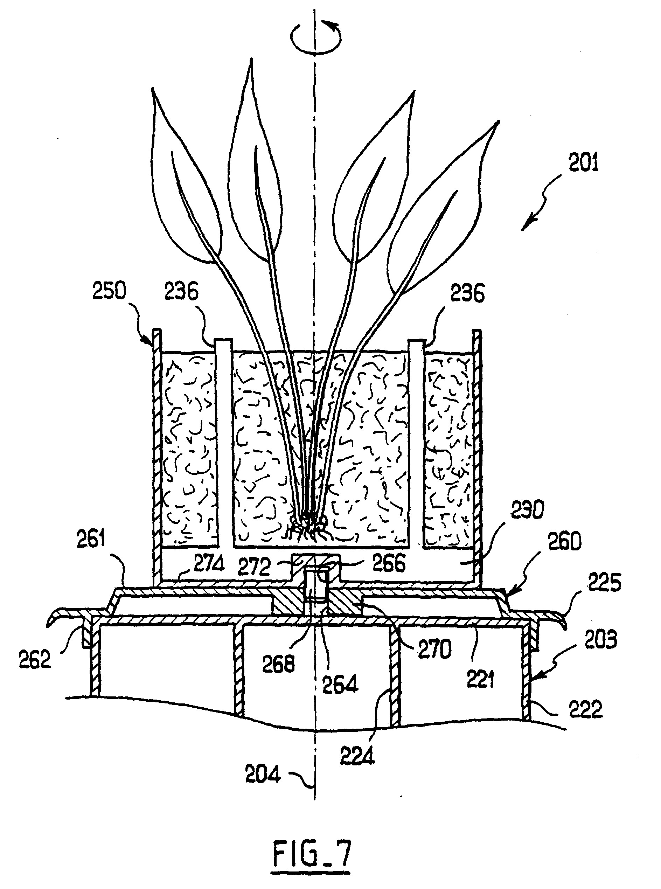

On va maintenant décrire un troisième mode de réalisation du dispositif, qui est illustré à la figure 7, et qui ne sera décrit que pour ses différences par rapport aux modes de réalisation précédents.

Le dispositif 201 comprend :
- un stator 202;
- un rotor 203 ayant un plateau supérieur 221, une paroi latérale 222, une jupe centrale 224, et un axe de rotation 204;
- un couvercle 260 lié par friction avec le rotor 203, et ayant une face supérieure 261 sensiblement plane qui surmonte le plateau supérieur 221 et qui s'ajuste sur celui-ci au moyen d'un rebord descendant 262, ledit couvercle présentant une lèvre annulaire 225;
- un récipient 250, de préférence de type récipient à réserve d'eau;
- et des moyens 264; 266, 268 de centrage et de fixation du récipient 250 sur le couvercle 260.

Les moyens de centrage et de fixation comprennent :
- un écrou 264 moulé en creux dans un bossage 270 prévu sensiblement au centre du couvercle 260, cet écrou s'ouvrant dans la face supérieure 261;
- un écrou borgne 266 moulé en creux dans un bossage 272 prévu sensiblement au centre du fond 274 du récipient 250, cet écrou s'ouvrant à l'extérieur du récipient 250;
- un goujon 268 amovible et fileté sur toute sa longueur, dont une extrémité est destinée à être vissée dans l'écrou 264 du couvercle 260 et dont l'autre extrémité est destinée à être vissée dans l'écrou 266 du récipient 250.

Lorsque le goujon fileté 268 maintient ensemble le couvercle 260 et le récipient 250, le récipient 250 se trouve automatiquement centré et fixé sur le couvercle 260.

Suivant une variante de réalisation (non représentée), on pourrait supprimer le couvercle 260, et réaliser l'écrou en creux 264 directement dans une épaisseur de la face supérieure 255 du plateau supérieur 221 du rotor, le rotor pouvant alors comporter la lèvre annulaire 225.

On pourrait également remplacer le goujon par une vis dont la tête serait placée sous le couvercle 260 ou respectivement le plateau supérieur 221, et venant se visser dans l'écrou 266 du récipient 250.

Le deuxième et le troisième modes de réalisation présentent l'avantage de combiner le dispositif d'illumination de plante du premier mode de réalisation avec un récipient destiné à recevoir ladite plante.

Bien sûr, l'invention n'est pas limitée aux exemples qui viennent d'être décrits et de nombreux aménagements peuvent être apportés à ces exemples sans sortir du cadre de l'invention.

Par exemple on pourrait remplacer l'alimentation de type électrique par une alimentation de type solaire.

On pourrait aussi remplacer le moteur à courant continu par un moteur piézo-électrique, ce type de moteur étant d'autant plus avantageux que les vitesses recherchées sont lentes. Un moteur piézo-électrique supprimerait la nécessité des moyens de démultiplication du mouvement.

Les moyens pour détecter l'usure de la pile peuvent comprendre des moyens de mesure de tension qui ne sont activés que pendant les impulsions produites par le compteur et qui, en cas de tension insuffisante, déclenchent un moyen d'alarme permanent, tel que lumineux ou constitué par le déplacement d'un indicateur mécanique.

## Revendications

1. Dispositif pour l'illumination équilibrée de végétaux vivants, comprenant un stator (2), un rotor (3) mobile en rotation relativement au stator selon un axe (4) sensiblement vertical, un moteur (31) d'entraînement du rotor, relié à une source d'énergie (56), le rotor étant équipé de moyens (21) pour recevoir au moins indirectement les végétaux et les entraîner avec lui par rapport au stator en une rotation normale dont la cadence journalière est inférieure à environ une dizaine de tours par jour, **caractérisé par** des moyens (90) mis à la disposition de l'utilisateur pour produire à volonté une rotation temporaire du rotor par rapport au stator à une vitesse plus grande que celle correspondant à ladite cadence journalière.

2. Dispositif selon la revendication 1, **caractérisé en ce que** la source d'énergie (56) est autonome et amovible, et comprend de préférence au moins une pile électrique de longue durée.

3. Dispositif de support tournant selon la revendication 1 ou 2, **caractérisé en ce que** la rotation normale du rotor par rapport au stator est sensiblement continue.

4. Dispositif selon l'une quelconque des revendications précédentes, **caractérisé en ce qu'**il comprend des moyens de commande (61) déterminant au moins un paramètre (72) de la rotation normale du rotor par rapport au stator.

5. Dispositif selon la revendication 4, **caractérisé en ce que** les moyens de commande sont réglables.

6. Dispositif selon la revendication 4 ou 5, **caractérisé en ce que** lesdits moyens de commande sont des moyens de commande électroniques aménagés sur un circuit imprimé.

7. Dispositif de support tournant selon l'une quelconque des revendications 4 à 6, **caractérisé en ce que** lesdits moyens de commande comprennent des moyens (74, 76) pour interrompre la rotation normale du rotor par rapport au stator pendant au moins un laps de temps (77)correspondant par exemple à une période nocturne.

8. Dispositif selon l'une des revendications 1 à 7, **caractérisé en ce qu'**il comprend des moyens pour produire à intervalles de temps réguliers une rotation élémentaire du rotor (3) selon un angle prédéterminé, les rotations élémentaires étant séparées par des périodes de repos élémentaires, de façon que la rotation normale totale du rotor en 24 heures corresponde à la somme des rotations élémentaires.

9. Dispositif selon la revendication 8, **caractérisé en ce que** la durée des intervalles de temps est réglable.

10. Dispositif selon l'une quelconque des revendications précédentes, **caractérisé en ce que** la vitesse moyenne de rotation normale du rotor par rapport au stator est sensiblement comprise entre environ un dixième de tour et environ un demi-tour par jour.

11. Dispositif selon l'une des revendications 8 à 10, **caractérisé en ce que** les moyens (90) mis à la disposition de l'utilisateur sont des moyens pour produire temporairement une alimentation continue du moteur (31) qui est alimenté par intermittences pour la rotation normale.

12. Dispositif de support tournant selon l'une quelconque des revendications précédentes, **caractérisé en ce que** le rotor (3) est aménagé pour supporter les végétaux (100) et repose sur le stator par un dispositif annulaire de roulement (12).

13. Dispositif selon l'une quelconque des revendications précédentes, **caractérisé en ce qu'**il comprend en outre des moyens d'entraînement du rotor par rapport au stator, comprenant au moins une roue d'entraînement (48) entraînée par le moteur et roulant sur une couronne intérieure (51) du rotor (3).

14. Dispositif selon l'une quelconque des revendications précédentes, **caractérisé en ce qu'**il comprend une cloison supérieure (227) à contour fermé qui s'élève au-dessus du plateau supérieur (221), et qui forme avec ledit plateau supérieur (221) un récipient (250, 350, 450) destiné à recevoir des végétaux vivants.

15. Dispositif selon la revendication 14, **caractérisé en ce que** la cloison supérieure (227) est moulée avec le plateau supérieur (221).

16. Dispositif selon l'une quelconque des revendications 1 à 13, **caractérisé en ce qu'**il comprend un récipient (250) destiné à recevoir des végétaux vivants et des moyens (264, 266, 268) de centrage et de fixation du récipient (250) sur la face supérieure (255) du plateau supérieur (221).

17. Dispositif selon l'une quelconque des revendications 1 à 13, **caractérisé en ce qu'**il comprend un récipient (250) destiné à recevoir des végétaux vivants, un couvercle (260) ayant une face supérieure (261) et s'ajustant sur le plateau supérieur (221), et des moyens (264, 266, 268) de centrage et de fixation du récipient (250) sur la face supérieure (261).

18. Dispositif selon la revendication 16 ou 17, **caractérisé en ce que** les moyens de centrage et de fixation (264, 266, 268) comprennent un écrou fileté borgne(266) formé en creux dans le fond du récipient (250), destiné à recevoir une pièce filetée (268) associée à ladite face supérieure (255, 261).

19. Dispositif selon l'une quelconque des revendications 14 à 18, **caractérisé en ce que** le récipient (250, 350, 450) est un récipient à réserve d'eau (230) comprenant au moins deux conduits d'alimentation (236) de ladite réserve d'eau (230), répartis autour de l'axe (204).

## Patentansprüche

1. Vorrichtung zur ausgewogenen Beleuchtung von lebenden Pflanzen, mit einem Stator (2), einem relativ zum Stator (2) um eine im Wesentlichen vertikale Achse (4) drehbaren Rotor (3) und einem mit einer Energiequelle (56) verbundenen Antriebsmotor (31) des Rotors, der mit einer Einrichtung (21) zur wenigstens indirekten Aufnahme und einer zum Stator relativen Bewegung der Pflanze in einer normalen Rotation in einem Tagesrhythmus von weniger als etwa zehn Umdrehungen am Tag versehen ist, **gekennzeichnet durch** eine Handhabungseinrichtung (90) für den Benutzer zur beliebigen vorübergehenden Drehung des Rotors relativ zum Stator mit einer größeren Geschwindigkeit als die des genannten Tagesrhythmus.

2. Vorrichtung nach Anspruch 1, **dadurch gekennzeichnet, dass** die Energiequelle (56) autonom und auswechselbar ist und vorzugsweise wenigstens eine Batterie mit langer Lebensdauer aufweist.

3. Drehbare Tragvorrichtung nach Anspruch 1 oder 2, **dadurch gekennzeichnet, dass** die normale Rotation des Rotors relativ zum Stator im Wesentlichen kontinuierlich erfolgt.

4. Vorrichtung nach einem der vorhergehenden Ansprüche, **dadurch gekennzeichnet, dass** sie eine Steuereinrichtung (61) aufweist, die wenigstens einen Parameter (72) der normalen Rotation des Rotors relativ zum Stator bestimmt.

5. Vorrichtung nach Anspruch 4, **dadurch gekennzeichnet, dass** die Steuereinrichtung regelbar ist.

6. Vorrichtung nach Anspruch 4 oder 5, **dadurch gekennzeichnet, dass** die Steuereinrichtung eine elektronische Steuereinrichtung ist, die auf einer gedruckten Schaltung aufgebaut ist.

7. Drehbare Tragvorrichtung nach einem der Ansprüche 4 bis 6, **dadurch gekennzeichnet, dass** die Steuereinrichtung Mittel (74, 76) zur Unterbrechung der normalen Rotation des Rotors relativ zum Stator während wenigstens eines Zeitraums (77) aufweist, der beispielsweise einer Nachtperiode entspricht.

8. Vorrichtung nach einem der Ansprüche 1 bis 7, **dadurch gekennzeichnet, dass** sie eine Einrichtung zur Erzeugung einer Elementarrotation des Rotors (3) über einen vorbestimmten Winkel in regelmäßigen Zeitabständen erzeugt, wobei die Elementarrotationen durch elementare Ruheperioden derart unterbrochen sind, dass die normale Gesamtrotation des Rotors in 24 Stunden der Summe der Elementarrotationen entspricht.

9. Vorrichtung nach Anspruch 8, **dadurch gekennzeichnet, dass** die Dauer der Zeitintervalle einstellbar ist.

10. Vorrichtung nach einem der vorhergehenden Ansprüche, **dadurch gekennzeichnet, dass** die mittlere Geschwindigkeit der normalen Rotation des Rotors relativ zum Stator im Wesentlichen zwischen etwa einer zehntel Umdrehung und etwa einer halben Umdrehung pro Tag liegt.

11. Vorrichtung nach einem der Ansprüche 8 bis 10, **dadurch gekennzeichnet, dass** die Handhabungseinrichtung (90) für den Benutzer eine Einrichtung zur vorübergehenden Erzeugung einer kontinuierlichen Versorgung des Motors (31) ist, der mit Unterbrechungen für die normale Rotation gespeist wird.

12. Drehbare Tragvorrichtung nach einem der vorhergehenden Ansprüche, **dadurch gekennzeichnet, dass** der Rotor (3) zum Tragen der Pflanze (100) ausgebildet und auf dem Stator über eine ringförmige Rolleinrichtung (12) gelagert ist.

13. Vorrichtung nach einem der vorhergehenden Ansprüche, **dadurch gekennzeichnet, dass** sie ferner Antriebsmittel für den Rotor relativ zum Stator aufweist, die wenigstens ein durch den Motor angetriebenes Antriebsrad (48) enthalten, das auf einem Innenring (51) des Rotors (3) rollt.

14. Vorrichtung nach einem der vorhergehenden Ansprüche, **dadurch gekennzeichnet, dass** sie eine obere geschlossene Zwischenwand (227) aufweist, die sich oberhalb der Oberseite (221) befindet und die mit der Oberseite (221) einen Behälter (250, 350, 450) zur Aufnahme der lebenden Pflanzen bildet.

15. Vorrichtung nach Anspruch 14, **dadurch gekennzeichnet, dass** die obere Zwischenwand (227) mit der Oberseite (221) ein Gussteil bildet.

16. Vorrichtung nach einem der Ansprüche 1 bis 13, **dadurch gekennzeichnet, dass** sie einen Behälter (250) zur Aufnahme der lebenden Pflanzen und eine Zentrier- und Befestigungseinrichtung (264, 266, 268) für den Behälter (250) auf der Oberfläche (255) der Oberseite (221) aufweist.

17. Vorrichtung nach einem der Ansprüche 1 bis 13, **dadurch gekennzeichnet, dass** sie einen Behälter (250) zur Aufnahme der lebenden Pflanzen, einen Deckel (260), der mit einer Oberfläche versehen ist und sich auf der Oberseite (221) justiert, und mit Zentrier- und Befestigungseinrichtung (264, 266, 268) für den Behälter (250) auf der Oberfläche (261) versehen ist.

18. Vorrichtung nach Anspruch 16 oder 17, **dadurch gekennzeichnet, dass** die Zentrier- und Befestigungseinrichtung (264, 266, 268) eine Blindgewindemutter (266) aufweist, die auf dem Boden des Behälters (250) hohl und zur Aufnahme eines mit der Oberfläche (255, 261) verbundenen Gewindestücks (268) ausgebildet ist.

19. Vorrichtung nach einem der Ansprüche 14 bis 18, **dadurch gekennzeichnet, dass** der Behälter (250, 350, 450) ein Behälter mit einem Wasservorrat (230) ist, der wenigstens zwei um die Achse (204) verteilte Zuführungsleitungen (236) zu dem Wasservorrat (230) aufweist.

## Claims

1. Device for providing live plants with balanced lighting, consisting of a stator (2), a rotor (3) movable in rotation relative to the stator about a substantially vertical axis (4), a motor (31) for driving the rotor, connected to an energy source (56), the rotor being equipped with means (21) to receive the plants at least indirectly and to drive them with it relative to the stator in a normal rotation, the daily rate of which is lower than about 10 revolutions per day, **characterised by** means (90) at the disposal of the user to produce a temporary rotor rotation relative to the stator at will, at a speed faster than that corresponding to the said daily rate.

2. Device according to claim 1, **characterised in that** the energy source (56) is autonomous and portable, and preferably consists of at least one long-life electric battery.

3. Rotating support device according to claim 1 or 2, **characterised in that** the normal rotation of the rotor relative to the stator is more or less continuous.

4. Device according to any one of the previous claims, **characterised in that** it comprises control means (61) determining at least one parameter (72) of the normal rotation of the rotor relative to the stator.

5. Device according to claim 4, **characterised in that** the control means are adjustable.

6. Device according to claim 4 or 5, **characterised in that** the said control means are electronic control means fitted onto a printed circuit.

7. Rotating support device according to any one of claims 4 to 6, **characterised in that** the said control means comprise means (74, 76) to interrupt the normal rotation of the rotor relative to the stator for at least a period of time (77) corresponding to an overnight period for example.

8. Device according to any one of claims 1 to 7, **characterised in that** it comprises means to produce an elementary rotation of the rotor (3) according to a predetermined angle, at regular time intervals, the elementary rotations being separated by elementary rest periods, so that the total normal rotation of the rotor over 24 hours corresponds to the sum of the elementary rotations.

9. Device according to claim 8, **characterised in that** the duration of the time intervals is adjustable.

10. Device according to any one of the previous claims, **characterised in that** the average normal rotational speed of the rotor relative to the stator is approximately comprised between about one tenth of a revolution and about half a revolution per day.

11. Device according to one of claims 8 to 10, **characterised in that** means (90) at the disposal of the user are means for temporarily producing a continuous power supply to the motor (31) which is applied intermittently for normal rotation.

12. Rotating support device according to any one of the previous claims, **characterised in that** the rotor (3) is arranged to support the plants (100) and rests on the stator by means of an annular rolling device (12).

13. Device according to any one the previous claims, **characterised in that** moreover it comprises means for driving the rotor relative to the stator, comprising at least one driving wheel (48) driven by the motor and rolling on an inner ring (51) of the rotor (3).

14. Device according to any one of the previous claims, **characterised in that** it comprises an upper closed profile partition (227) which is raised above the upper platform (221), and which forms a container (250, 350, 450) with said upper platform (221) intended to receive live plants.

15. Device according to claim 14, **characterised in that** the upper partition (227) is moulded with the upper platform (221).

16. Device according to any one of claims 1 to 13, **characterised in that** it comprises a container (250) intended to receive live plants and means (264, 266, 268) for centring and fixing the container (250) onto the upper surface (255) of upper platform (221).

17. Device according to any one of claims 1 to 13, **characterised in that** it comprises a container (250) intended to receive live plants, a cover (260) having an upper face (261) and fitting onto the upper platform (221), and means (264, 266, 268) for centring and fixing the container (250) onto the upper surface (261).

18. Device according to claim 16 or 17, **characterised in that** the means of centring and fixing (264, 266, 268) comprise a threaded cap nut (266) recessed into the bottom of container (250), intended to receive a threaded part (268) associated with the said upper surface (255, 261).

19. Device according to any one of claims 14 to 18, **characterised in that** the container (250, 350, 450) is a container with a water reservoir (230) comprising at least two supply conduits (236) of said water reservoir (230), distributed around the axis (204).
